# EUROPEAN PATENT SPECIFICATION

(11) **EP 2 727 760 B1**
(45) Date of publication and mention of the grant of the patent: **25.05.2016**
(21) Application number: 13190482.3
(22) Date of filing: 28.10.2013
(51) Int. Cl.: B60L 15/20

(54) **Driving apparatus for use in electric vehicle and electric vehicle**
Antriebsvorrichtung zur Verwendung in Elektrofahrzeug sowie Elektrofahrzeug
Appareil d'entraînement destiné à être utilisé dans un véhicule électrique et ledit véhicule

(30) Priority: 31.10.2012 JP 2012241386; 28.05.2013 JP 2013111702
(43) Date of publication of application: 07.05.2014
(73) Proprietor: Yamaha Hatsudoki Kabushiki Kaisha, SHIZUOKA-KEN 438-8501 (JP)
(72) Inventor: Hino, Haruyoshi, Shizuoka, 438-8501 (JP)
(74) Representative: Zimmermann, Tankred Klaus

(56) References cited:
- EP-A1- 2 289 794
- WO-A1-2011/120124
- DE-A1-102010 026 767
- JP-A- 2002 255 081
- JP-A- 2007 161 219
- US-A- 5 489 002
- US-A1- 2011 048 831
- US-A1- 2012 109 436

## Description

### [TECHNICAL FIELD]

The present invention relates to a driving apparatus for use in electric vehicle, and to an electric vehicle.

### [BACKGROUND ART]

An electric vehicle includes a control device for use in electric vehicle that supplies a current to a rotating electric machine in accordance with the amount of operation of an accelerator operator that is operated by a rider. A driving force generated by the rotating electric machine causes the electric vehicle to travel.

The electric vehicle includes a battery as a power source. A possible travel distance obtained per charging is limited by the capacity of the battery. Thus, the electric vehicle is better suited for a short-distance travel than a long-distance travel. Moreover, unlike a bicycle, the electric vehicle can be caused to travel by the rider operating the accelerator operator, without pedaling. Therefore, the electric vehicle, which is considered as a vehicle more convenient than a bicycle, tends to be used for purposes (such as commuting and shopping) intimately involved in daily lives. Accordingly, in general, a high demand for ease of use and good riding comfort is put on the electric vehicle.

Patent Document 1 discloses an electric vehicle that controls the torque of a rotating electric machine appropriately for the state of traveling such that smooth acceleration performance and adequate climbing ability can be exerted.

### [PRIOR ART DOCUMENTS]

### [PATENT DOCUMENTS]

[Patent Document 1] Japanese Patent Application Laid-Open No. 2001-197614

The document "US 5 489 002 A" discloses a driving apparatus according to the preambe of claim 1.

### [SUMMARY OF THE INVENTION]

### [PROBLEMS TO BE SOLVED BY THE INVENTION]

As shown in Patent Document 1, general speed-torque characteristics of a motor of an electric vehicle is not flat in a range of the speed of rotation that is actually used. Normally, in the electric vehicle, a high torque occurs under a low speed, so that a behavior (a change in the vehicle speed) of the vehicle relative to a change in the amount of operation of the accelerator operator tends to be large. As shown in Patent Document 1, in a case where the climbing ability of the electric vehicle is increased by the generation of a high torque under a low speed, the behavior of the vehicle relative to a change in the amount of operation of the accelerator operator is more prominently increased.

On the other hand, in the electric vehicle, a current value is controlled in accordance with the amount of operation of the accelerator operator over a relatively wide speed range. In the electric vehicle, normally, a lower limit value of the speed range is 0 km/h while an upper limit value of the speed range is greater than the lowest speed that enables the electric vehicle to travel while maintaining balance.

Thus, in the electric vehicle, the behavior (a change in the vehicle speed) of the vehicle relative to a change in the amount of operation of the accelerator operator tends to be large, but nevertheless the current value is controlled in accordance with the amount of operation of the accelerator operator over a relatively wide range. This makes it difficult to finely adjust the speed. As a result, particularly in traveling under a low speed, ease of use and riding comfort may be impaired.

The present invention is an invention accomplished in view of the problems described above, and an object of the present invention is to provide a driving apparatus for use in electric vehicle, that is able to smoothly adjust a torque based on the rider's feeling while the electric vehicle is traveling based on an operation of an accelerator operator, that is excellent in ease of use and in riding comfort, and that is suitable for purposes intimately involved in daily lives.

### [MEANS FOR SOLVING THE PROBLEMS]

The present invention is an invention accomplished in view of the problems described above, and adopts the following configurations.
(1) A driving apparatus for use in electric vehicle,
   the driving apparatus including:
   a rotating electric machine configured to drive a wheel that is rotatably mounted to a vehicle body;
   a hand-operated accelerator configured to be operated by the hands of a rider;
   an accelerator operation detection part that detects the amount of operation of the hand-operated accelerator;
   a current adjustment input member configured such that a torque used for adjustment of a current value supplied to the rotating electric machine is inputted to the current adjustment input member by the feet of the rider, at least part of the torque being transmitted to a wheel that is rotatably mounted to the vehicle body;
   a torque detection part that detects a torque transmitted from the current adjustment input member to the wheel; and
   a control device that supplies, to the rotating electric machine, a current in accordance with the amount of operation of the hand-operated accelerator detected by the accelerator operation detection part,
   the control device being configured to
      when a torque transmitted from the current adjustment input member to the wheel increases under a state where a current in accordance with the amount of operation of the hand-operated accelerator is being supplied to the rotating electric machine, increase a current supplied to the rotating electric machine in accordance with the amount of increase in the torque transmitted from the current adjustment input member to the wheel, and
      when a torque transmitted from the current adjustment input member to the wheel decreases under a state where a current supplied to the rotating electric machine is increasing, decrease a current supplied to the rotating electric machine in accordance with the amount of decrease in the torque transmitted from the current adjustment input member to the wheel.

   In a configuration of (1), in a state where the current in accordance with the amount of operation of the hand-operated accelerator is supplied to the rotating electric machine, the rider can feel, with his/her feet, a reaction force given from a torque inputted to the current adjustment input member, and, by adjusting the torque inputted to the current adjustment input member, can adjust a torque outputted from the rotating electric machine. Accordingly, the torque that the rider inputs to the current adjustment input member is likely to be consistent with the rider's intention, and not easily affected by shaking, a change in the rider's posture, and the like, caused under a low speed and a low load. This makes it easy to finely adjust the speed.
   Additionally, in the configuration of (1), at least part of the torque is transmitted from the current adjustment input member to the wheel. Therefore, when the speed of rotation of the wheel increases as a result of the adjustment of the current value at a time of accelerating, the torque transmitted from the current adjustment input member to the wheel naturally decreases. Accordingly, it is not necessary for the rider to perform a feedback control on the hand-operated accelerator or the current adjustment input member in order to stop accelerating (to perform an operation of checking the behavior of the accelerated vehicle and then stop the accelerating). That is, providing the current adjustment input member to which a torque is inputted by the rider's feet enables a self-adaptive current adjustment (torque adjustment). This can suppress occurrence of mismatch between the rider's intention in the operation and the behavior of the vehicle.
   Accordingly, the configuration of (1) can provide an electric vehicle that is able to smoothly adjust a torque based on the rider's feeling while the electric vehicle is traveling based on an operation of the hand-operated accelerator, that is excellent in ease of use and in riding comfort, and that is suitable for purposes intimately involved in daily lives.
(2) The driving apparatus for use in electric vehicle according to (1), wherein in a state where the current adjustment input member is not operated and the hand-operated accelerator is operated, the control device supplies, to the rotating electric machine, a current in accordance with the amount of operation of the hand-operated accelerator such that a lower limit value of a speed range of the electric vehicle is 0 km/h and an upper limit value of the speed range of the electric vehicle is greater than the lowest speed that enables the electric vehicle to travel while maintaining balance,
   the control device is configured to:
   when a torque transmitted from the current adjustment input member to the wheel increases under a state where a current in accordance with the amount of operation of the hand-operated accelerator is being supplied to the rotating electric machine so that the electric vehicle is traveling at a speed equal to or higher than the lowest speed, increase a current supplied to the rotating electric machine in accordance with the amount of increase in the torque transmitted from the current adjustment input member to the wheel; and
   when a torque transmitted from the current adjustment input member to the wheel decreases under a state where a current supplied to the rotating electric machine is increasing, decrease a current supplied to the rotating electric machine in accordance with the amount of decrease in the torque transmitted from the current adjustment input member to the wheel.

   In a configuration of (2), the speed range of the electric vehicle under a state where the hand-operated accelerator is operated ranges from 0 km/h to a predetermined value greater than the lowest speed that enables the electric vehicle to travel while maintaining balance. Therefore, a torque control in accordance with the amount of operation of the hand-operated accelerator can be performed over a relatively wide speed range. In the configuration of (2), additionally, the current supplied to the rotating electric machine is adjusted in accordance with increase and decrease in the torque transmitted from the current adjustment input member to the wheel under a state where the electric vehicle is traveling at a speed equal to or higher than the lowest speed. Accordingly, a torque adjustment under a low speed and a low load can be smoothly performed with an enhanced reliability.
(3) The driving apparatus for use in electric vehicle according to (1) or (2), wherein
   the driving apparatus includes a one-way clutch that transmits, among torques inputted to the current adjustment input member, only the torque corresponding to a direction of advancing of the electric vehicle, to a wheel that is rotatably mounted to the vehicle body,
   the control device is configured to:
      when a torque transmitted from the current adjustment input member to the wheel through the one-way clutch increases under a state where a current in accordance with the amount of operation of the hand-operated accelerator is being supplied to the rotating electric machine, increase a current supplied to the rotating electric machine in accordance with the amount of increase in the torque transmitted from the current adjustment input member to the wheel through the one-way clutch; and
      when a torque transmitted from the current adjustment input member to the wheel through the one-way clutch decreases under a state where a current supplied to the rotating electric machine is increasing, decrease a current supplied to the rotating electric machine in accordance with the amount of decrease in the torque transmitted from the current adjustment input member to the wheel through the one-way clutch.

   In a configuration of (3), the one-way clutch transmits, to the wheel, only the torque corresponding to the direction of advancing of the electric vehicle. This provides torque transmission that is efficient for traveling of the vehicle. Under this state, the current supplied to the rotating electric machine is adjusted in accordance with increase and decrease in the torque transmitted from the current adjustment input member to the wheel through the one-way clutch. Accordingly, a torque adjustment under a low speed and a low load can be smoothly performed with an enhanced efficiency.
(4) The driving apparatus for use in electric vehicle according to (3), wherein
   when a torque is inputted to the current adjustment input member by the feet of the rider such that the speed of rotation of a wheel caused by a torque inputted to the current adjustment input member exceeds the speed of rotation of the wheel caused by a current supplied to the rotating electric machine, a torque is transmitted from the current adjustment input member to the wheel through the one-way clutch,
   when the current adjustment input member is operated such that the speed of rotation of a wheel caused by a torque inputted to the current adjustment input member falls below the speed of rotation of the wheel caused by a current supplied to the rotating electric machine, the one-way clutch is disconnected.
   In a configuration of (4), at a time of accelerating, the one-way clutch is connected, so that a torque is transmitted from the current adjustment input member to the wheel through the one-way clutch. This torque drives the wheel, and increases the current that is supplied to the rotating electric machine. As a result, the speed of rotation of the wheel increases. When, consequently, the speed of rotation of the wheel caused by the current supplied to the rotating electric machine exceeds the speed of rotation of the wheel caused by the torque inputted to the current adjustment input member, the one-way clutch is disconnected. Thereby, the torque transmission ends, and the adjustment of the current supplied to the rotating electric machine ends. In this manner, a torque adjustment based on the rider's feeling can be more smoothly performed.
(5) The driving apparatus for use in electric vehicle according to any one of (1) to (4), wherein
   in changing a current value supplied to the rotating electric machine in accordance with the amount of change in the torque transmitted to the wheel, the control device varies the amount of change in the current value based on a remaining battery capacity.
   In a configuration of (5), for example, when the remaining battery capacity is high, the amount of change in the current value in accordance with the amount of increase in the torque transmitted to the wheel is increased. On the other hand, when the remaining battery capacity is low, the amount of change in the current value in accordance with the amount of increase in the torque transmitted to the wheel is reduced. As a result, even when an inputted torque is at the same level, the degree of increase in the intensity of the current varies based on the remaining battery capacity. This can suppress battery consumption when the remaining battery capacity is low. Accordingly, it takes time before the remaining battery capacity reaches zero, and the number of times the battery should be charged can be reduced. Therefore, the driving apparatus for use in electric vehicle is more suitable for purposes intimately involved in daily lives.
(6) The driving apparatus for use in electric vehicle according to any one of (1) to (5), wherein
   the control device is configured to:
   when a torque transmitted from the current adjustment input member to the wheel increases under a state where a current in accordance with the amount of operation of the hand-operated accelerator is being supplied to the rotating electric machine, increase a current supplied to the rotating electric machine in accordance with the amount of increase in the torque transmitted from the current adjustment input member to the wheel, the current resulting from the increase being not less than a current value that has been supplied to the rotating electric machine at a time point when a torque transmitted to the wheel increased; and
   when a torque transmitted from the current adjustment input member to the wheel decreases under a state where a current supplied to the rotating electric machine is increasing, decrease a current supplied to the rotating electric machine in accordance with the amount of decrease in the torque transmitted from the current adjustment input member to the wheel, the current resulting from the decrease being not less than a current value that has been supplied to the rotating electric machine at a time point when a torque transmitted to the wheel increased.

   In a configuration of (6), not only the current in accordance with the amount of operation of the hand-operated accelerator but also the current for the adjustment based on the torque transmitted to the wheel is provided to the rider. This enables the rider to, for example, operate the hand-operated accelerator to thereby ensure a minimum required vehicle speed at a time of traveling under a low speed and a low load, and, as appropriate, operate the current adjustment input member to thereby adjust the vehicle speed in a range not less than the minimum required vehicle speed. Since the roles of the hand-operated accelerator and the current adjustment input member are clearer to the rider so that the operation is easier, a torque adjustment based on the rider's feeling can be further smoothly performed. As a result, the ease of use and the riding comfort can be further improved.
(7) An electric vehicle,
   the electric vehicle including:
   a vehicle body;
   a wheel that is rotatably mounted to the vehicle body; and
   the driving apparatus for use in electric vehicle according to any one of (1) to (6).

   The electric vehicle of (7) is able to smoothly adjust a torque based on the rider's feeling while the electric vehicle is traveling based on an operation of the accelerator operator, excellent in ease of use and in riding comfort, and suitable for purposes intimately involved in daily lives.

### [EFFECTS OF THE INVENTION]

The present invention provides an electric vehicle that is able to smoothly adjust a torque based on the rider's feeling while the electric vehicle is traveling based on an operation of an accelerator operator, that is excellent in ease of use and in riding comfort, and that is suitable for purposes intimately involved in daily lives.

### [BRIEF DESCRIPTION OF THE DRAWINGS]

[FIG. 1] A side view schematically showing an electric motorcycle according to an embodiment of the present invention.
[FIG. 2] A block diagram showing a main configuration concerning a drive system of the electric motorcycle shown in FIG. 1.
[FIG. 3] A diagram schematically showing the relationship between an output torque of a rotating electric machine and the number of rotations of the rotating electric machine.
[FIG. 4A] A diagram schematically showing an example of the relationship between time and power supplied to the rotating electric machine.
[FIG. 4B] A diagram schematically showing an example of the relationship between time and power supplied to the rotating electric machine.
[FIG. 4C] A diagram schematically showing an example of the relationship between time and power supplied to the rotating electric machine.

### [EMBODIMENTS FOR CARRYING OUT THE INVENTION]

The present inventors have conducted intensive studies in view of the problems described above, about a scene of traveling of an electric vehicle (hereinafter, also referred to simply as "electric vehicle") that supplies a current to a rotating electric machine in accordance with the amount of operation of a hand-operated accelerator that is operated by the hands of a rider. Consequently, the present inventors have found the following.

As described above, the electric vehicle is suitable for purposes intimately involved in daily lives. Therefore, when the electric vehicle travels, a situation where the electric vehicle passes on a crowded road, a congested intersection, or the like, occurs relatively often. When passing on a crowded road, a congested intersection, or the like, for example, the rider may slightly operate the hand-operated accelerator in order to travel at a constant low speed, and keep the state of the hand-operated accelerator constant. At this time, the rider has to hold the hand-operated accelerator in such a position (attitude) that the amount of operation of the hand-operated accelerator has a predetermined value between the maximum value and the minimum value. Since this operation is performed during traveling, the amount of operation of the hand-operated accelerator may vary due to shaking or the like.

When passing on a crowded road, a congested intersection, or the like, the electric vehicle at one time may travel at a constant low speed, and at another time may, for example, quickly alternates accelerating and decelerating while advancing at a low speed. For example, when a space occurs ahead of the vehicle in a crowded road, a congested intersection, or the like, the vehicle promptly accelerates to enter the space, and then promptly decelerates so that the vehicle speed returns to the original vehicle speed. Repeating this operation enables the vehicle to pass through a crowded road, a congested intersection, or the like, in a shorter time. In such driving, the rider operates the hand-operated accelerator in accordance with a travel distance and a speed he/she desires, and thereby adjusts the speed. Thus, the rider repeats accelerating, decelerating, and traveling at a constant speed. Since this operation is performed during traveling, the amount of operation of the hand-operated accelerator may vary due to shaking, a change in the rider's posture, and the like, caused at a time of accelerating or decelerating.

In this manner, the amount of operation of the hand-operated accelerator is likely to vary at a time of traveling at a constant speed under a low speed and a low load or at a time of repeating the accelerating and decelerating. In the electric vehicle, under a low speed, a variation in the amount of operation of the hand-operated accelerator results in a relatively large variation in a torque for driving a wheel. As a result, a fluctuation in the acceleration of the electric vehicle increases. Such a fluctuation in the acceleration may give a considerable degree of uncomfortableness to the rider who is operating the hand-operated accelerator in order to adjust the speed under a low speed and a low load.

In the electric vehicle, additionally, the torque for driving the wheel varies relatively largely in accordance with the amount of operation of the hand-operated accelerator, and therefore not a few riders operate the hand-operated accelerator based on a feedback control at a time of repeating the accelerating and decelerating under a low speed and a low load. Here, operating the hand-operated accelerator based on the feedback control means operating the hand-operated accelerator while checking a behavior of the vehicle relative to the amount of operation of the hand-operated accelerator. In a case of operating the hand-operated accelerator based on the feedback control in this manner, the rider checks the behavior of the vehicle and then performs the operation, which inevitably delays the operation. This consequently may cause a fluctuation in the acceleration that does not follow the rider's intention. Such a fluctuation in the acceleration gives a tremendous degree of uncomfortableness to the rider. As a result, ease of use and riding comfort may be impaired.

The present inventors have conducted further studies based on the findings described above, and found that the above-described problems can be solved by: providing, separately from the hand-operated accelerator, a current adjustment input member to which a torque is inputted from the rider's feet; and, while a current is being supplied to the rotating electric machine based on the amount of operation of the hand-operated accelerator, adjusting the current supplied to the rotating electric machine in accordance with the torque inputted to the current adjustment input member.

When the torque inputted to the current adjustment input member increases while a current is being supplied to the rotating electric machine based on the amount of operation of the hand-operated accelerator, the torque is transmitted to the wheel and the intensity of the current supplied to the rotating electric machine also increases. Since a reaction force given from the torque inputted to the current adjustment input member is transmitted to the rider's feet, the rider can adjust a torque input based on the strength of the reaction force given from the torque having reached his/her feet. In other words, the rider can feel, with his/her feet, the reaction force given from the torque inputted to the current adjustment input member, and, by adjusting the torque inputted to the current adjustment input member, can adjust a torque outputted from the rotating electric machine. Accordingly, a gap is not likely to occur between the torque that the rider inputs to the current adjustment input member and the rider's intention. As a result, the torque that the rider inputs to the current adjustment input member is not easily affected by shaking, a change in the rider's posture, and the like, caused at a time of traveling at a constant speed under a low speed and a low load or at a time of repeating the accelerating and decelerating.

Moreover, the torque is transmitted from the current adjustment input member to the wheel. Therefore, when the speed of rotation of the wheel increases as a result of an adjustment of a current value at a time of accelerating, the torque transmitted from the current adjustment input member to the wheel naturally decreases. Accordingly, it is not necessary for the rider to perform the feedback control on the accelerator operator or the current adjustment input member in order to stop accelerating (to perform an operation of checking the behavior of the accelerated vehicle and then stop the accelerating).

This can provide an electric vehicle that is able to smoothly adjust a torque based on the rider's feeling while the electric vehicle is traveling based on an operation of the accelerator operator, that is able to improve ease of use and riding comfort, and that is suitable for purposes intimately involved in daily lives.

In the following, the present invention will be described with reference to an embodiment illustrated in the drawings.

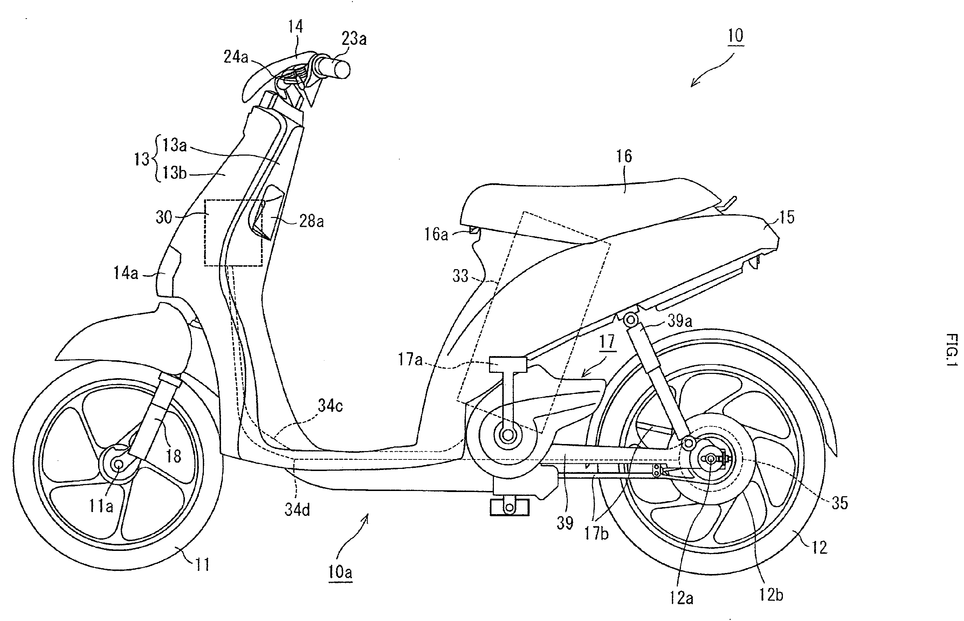

FIG. 1 is a side view schematically showing an electric motorcycle 10 according to an embodiment of the present invention. An electric motorcycle is an example of an electric vehicle. The electric vehicle includes an electric-vehicle control device that supplies a current to a rotating electric machine in accordance with a state of a hand-operated accelerator that is operated by a rider. A driving force generated by the rotating electric machine causes the electric vehicle to travel. The electric vehicle can be caused to travel not by using a force (such as a pedaling force) given by the rider as a driving force but by the driving force generated by the rotating electric machine. The electric vehicle has a battery as a power source, and does not receive a power supply from the outside during traveling. Preferably, the electric vehicle is, though not particularly limited, a small-size electric vehicle such as an electric two-wheeled vehicle, an electric three-wheeled vehicle, an electric vehicle for off-road use (all-terrain electric vehicle), and an electric wheelchair. Examples of the two-wheeled vehicle include a scooter, a moped, and a sport type two-wheeled vehicle. Preferably, the electric vehicle is a saddle-ride type electric vehicle. Examples of the saddle-ride type electric vehicle include an electric motorcycle, an electric three-wheeled vehicle, and an electric vehicle for off-road use.

The electric motorcycle 10 includes a pair of wheels composed of a front wheel 11 and a rear wheel 12, and a vehicle body 10a having the pair of wheels attached thereto. The electric motorcycle 10 is configured to travel at a relatively low speed (for example, 20 to 30 km/h or less). A handlebar 14 is attached above a front cover unit 13 that constitutes a front part of the vehicle body 10a. A light 14a is provided at the center of an upper area of a front surface of the front cover unit 13. A seat 16 is provided on an upper surface of a rear cover unit 15 that constitutes a rear part of the vehicle body 10a. A pedal unit 17 by which a rider inputs a pedaling force with his/her feet is provided in the vehicle body 10a at a location below the front side of the rear cover unit 15. The diameter of the wheel is, though not particularly limited, 10 to 16 inches, for example.

The front wheel 11 is rotatably supported on a lower end portion of a front fork 18 whose lower part is bifurcated. More specifically, two lower end portions of the front fork 18 rotatably support both side portions of a center shaft 11 a of the front wheel 11, thereby allowing the front wheel 11 to rotate on the center shaft 11 a. Furthermore, a head pipe (not shown) is provided at a top end portion of the front fork 18. The head pipe is coupled to a front end portion of a down tube (not shown) that constitutes a main body part of the vehicle body 10a.

A steering shaft (not shown) is mounted inside the head pipe such that the steering shaft is axially rotatable. A lower end portion of the steering shaft is coupled to a central portion of the top end of the front fork 18. An upper portion of the steering shaft protrudes upward from a top end portion of the head pipe, and the handlebar 14 is coupled to a top end portion of the steering shaft. Grips 23 a are provided at the right and left ends of the handlebar 14, respectively. Brake levers 24a serving to restrain rotation of the front wheel 11 or the rear wheel 12 are disposed near the grips 23 a, respectively.

The grip 23a is an example of the hand-operated accelerator of the present invention. Although no particular limitation is put on the hand-operated accelerator, the accelerator operator may be in the form of a button, a switch, a lever, and the like. As the amount of operation of the hand-operated accelerator, the amount of positional displacement (such as the angle of rotation), the derivative or integral of the amount of displacement, or the like, may be mentioned. Alternatively, the amount of operation of the hand-operated accelerator may be the amount of torque inputted to the hand-operated accelerator. A force given to the accelerator operator by the rider is not used as the driving force for the electric vehicle.

The front cover unit 13 includes a rear surface covering part 13a that defines a rear surface and a front surface covering part 13b that defines a front surface. A controller 30 is arranged in the front cover unit 13. The controller 30 is a device that electrically controls a drive system provided in the electric motorcycle 10. The controller 30 is an example of the control device of the present invention. A display unit (not shown) is provided in a recess 28a. The display unit displays a charge state of a battery 33, and the like. A power switch 45 is provided in the recess 28a, though not shown in FIG. 1. In FIG. 1, the reference numeral 34c denotes a lead connecting the controller 30 and the battery 33 to each other, and the reference numeral 34d denotes a lead connecting the controller 30 and a rotating electric machine 35 to each other.

A rear portion of the down tube, whose front end portion is coupled to the head pipe, extends obliquely downward from the portion coupled to the head pipe to the rear, and then curves to extend horizontally. A pair of rear frames (not shown) are coupled to a rear end portion of the down tube. The pair of rear frames extend obliquely upward to the rear within the rear cover unit 15. The pair of rear frames are arranged with a predetermined space therebetween, and their rear end portions are coupled to each other. The battery 33 is mounted between the rear frames.

Moreover, a rear arm 39 is coupled to the rear end portion of the down tube via a coupling member (not shown). The rear arm 39 has a pair of parallel arm members whose front end portions are coupled to each other. The rear arm 39 extends rearward. Rear end portions of the arm members of the rear arm 39 respectively support both side portions of a center shaft 12a of the rear wheel 12. The rear wheel 12 is rotatable on the center shaft 12a. A rear cushion 39a is arranged to bridge between an upper portion of the rear end of the rear arm 39 and a substantially central portion of the rear frame. Expansion and contraction of the rear cushion 39a allow a rear end portion of the rear arm 39 to swing.

A cover 12b is provided in a central portion of the rear wheel 12. The rotating electric machine 35 and a drum brake (not shown) are placed within the cover 12b. The rotating electric machine 35 is activated under control by the controller 30, to generate a driving force in the rear wheel 12. Upon an operation of the brake levers 24a, the activation of the rotating electric machine 35 is stopped under control by the controller 30.

The rotating electric machine 35 adopts the direct drive type. The direct drive type is a type that causes power (rotational force) of a rotating electric machine to be transmitted directly to a driving object wheel without interposition of any indirect power transmission mechanism. In this embodiment, the driving object wheel is the rear wheel 12. Here, the driving object wheel may be the front wheel 11, or may be both the front wheel 11 and the rear wheel 12. Additionally, the driving object wheel to be driven by the rotating electric machine and the wheel to which a torque inputted to pedals 17a is transmitted may be the same wheel or may be different wheels. It is not always necessary that the rotating electric machine of the present invention adopts the direct drive type. In other words, the rotating electric machine may be configured to transmit power to the wheel with interposition of an indirect power transmission mechanism.

The rotating electric machine 35 is a rotating electric machine of outer rotor type. The rotating electric machine of outer rotor type means a rotating electric machine in which a rotor (not shown) is arranged outside a stator (not shown) with respect to a radial direction of a wheel. However, the rotating electric machine of the present invention need not always be of outer rotor type, but may be of inner rotor type. Moreover, although the rotating electric machine 35 is of radial gap type, it may be of axial gap type.

The rotating electric machine 35 is an in-wheel motor. The in-wheel motor means a motor that is installed inside a hub part of a wheel. However, the rotating electric machine of the present invention need not always be the in-wheel motor.

The rotating electric machine 35 includes a permanent magnet (not shown) provided in its rotor. The permanent magnet provided in the rotor of the rotating electric machine 35 is a ferrite magnet. In the present invention, however, a type of the permanent magnet is not particularly limited. Although no particular limitation is put on the permanent magnet, a conventionally known magnet such as a ferrite magnet, a neodymium bonded magnet, a samarium-cobalt magnet, or a neodymium magnet is adoptable. The rotating electric machine 35 is not limited to a magnet motor including a permanent magnet, but may be, for example, a reluctance motor including no permanent magnet.

In this embodiment, the rotating electric machine 35 is an outer rotor in-wheel motor of direct drive type, and therefore a wide space within the wheel can be used. This allows the diameter of the rotor to be increased in order to ensure the torque. Increasing the diameter of the rotor increases the number of magnets (magnetic poles) included in the rotor. Additionally, since no speed reducer is interposed, use with a large number of rotations occurs more frequently, which results in a higher frequency of switching of the poles (N and S poles of the magnet) in the rotating electric machine. In a case where the frequency of switching of the poles in the rotating electric machine is high, a change in the magnetic force occurs frequently. Each time the magnetic force changes, a current occurs in a stator core so as to cancel the change. This current generates Joule heat in the stator core, and heat generation due to the Joule heat causes an energy loss. Accordingly, a large energy loss is likely to occur in a case where the rotating electric machine 35 is an outer rotor in-wheel motor of direct drive type.

In this respect, in the electric motorcycle 10, use of a magnet with a weak magnetic force, such as a ferrite magnet or a neodymium bonded magnet, can suppress an increase in the energy loss. Thus, in the electric motorcycle 10, an outer rotor in-wheel motor of direct drive type is adoptable as the rotating electric machine 35. As a result, the need for the power transmission mechanism is eliminated. This can enhance the energy efficiency, and also can reduce the number of parts. Moreover, weakening the magnetic force of the permanent magnet can reduce an iron loss of the rotating electric machine under a high speed.

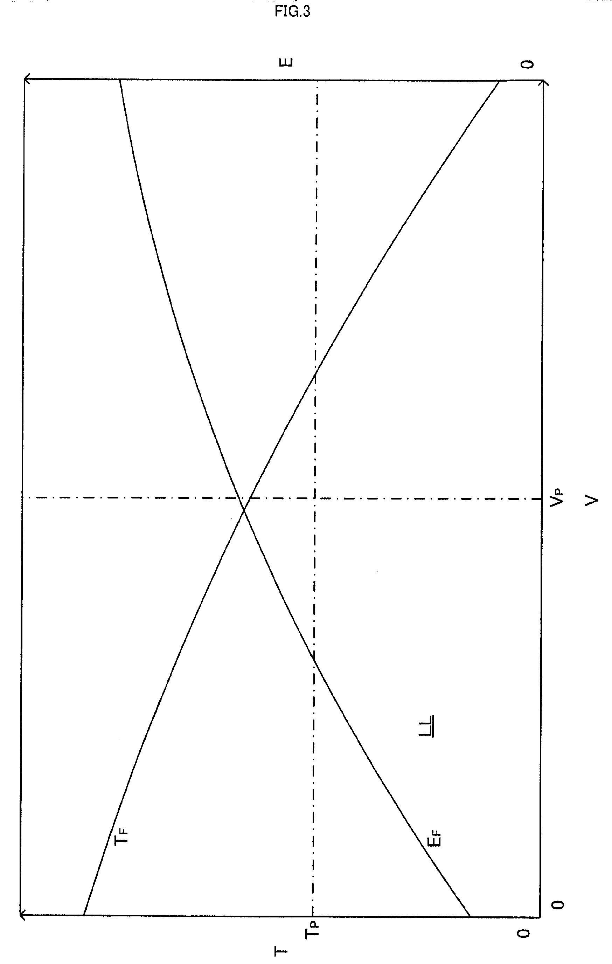

The rotating electric machine 35 is a DC motor, and more specifically is a brushless DC motor. As the amount of operation the rider performs on the grips 23a is larger, a current supplied to the rotating electric machine 35 is higher. Under a state where the current supplied to the rotating electric machine 35 is constant, an increase in the load during traveling increases the torque and also reduces the number of rotations. On the other hand, a reduction in the load during traveling reduces the torque and also increases the number of rotations (see FIG. 3).

A chain 17b runs between a gear unit (not shown) provided in the pedal unit 17 and a gear unit provided in the rear wheel 12. When the rider turns pedals 17a with his/her feet, a driving force caused by human power is transmitted from the pedal unit 17 to the rear wheel 12 through the chain 17b.

In the above-described manner, the electric motorcycle 10 is configured such that the pedals 17a can be turned with the feet to transmit the driving force to the rear wheel 12. That is, even when the electric motorcycle 10 is powered off, the electric motorcycle 10 is able to travel in the form of a bicycle. When the pedals 17a are operated under a state where the electric motorcycle 10 is powered on, the pedals 17a function as the current adjustment input member. Details of this control will be described later.

When the rider keeps his/her feet rested on the pedals 17a without turning the pedals 17a, a one-way clutch (not shown) provided at the rear wheel 12 side is activated to prevent the rotation of the rotating electric machine 35 from being transmitted to the pedals 17a through the chain 17b. In other words, the one-way clutch transmits, among torques inputted to the pedals 17a, only the torque corresponding to the direction of advancing of the electric motorcycle 10, to the rear wheel 12. A conventionally known one-way clutch, such as a ratchet mechanism or cam mechanism (not shown) provided between a hub and a sprocket having a chain wound thereon in the rear wheel 12, may be mentioned as the one-way clutch. The rear wheel 12 is a freewheel. Since such a one-way clutch is conventionally known, a detailed description thereof is omitted herein. In the electric motorcycle 10, when a torque is inputted to the pedals 17a, the one-way clutch is connected so that the torque is transmitted from the pedals 17a to the rear wheel 12 through the one-way clutch, in order that the speed of rotation of the wheel (for example, a sprocket of the rear wheel 12) caused by the torque inputted to the pedals 17a exceeds the speed of rotation of the wheel (for example, a hub of the rear wheel 12) caused by the power supplied to the rotating electric machine 35. Thereby, the speed of rotation of the rear wheel 12 increases. An increase in the torque leads to an increase in the power supplied to the rotating electric machine 35. This consequently increases the speed of rotation of the rear wheel 12. As a result, when the speed of rotation of the wheel (for example, the sprocket) caused by the torque inputted to the pedals 17a falls below the speed of rotation of the wheel (for example, the hub) caused by the power supplied to the rotating electric machine 35, the one-way clutch is disconnected so that the torque is no longer transmitted from the pedals 17a to the rear wheel 12. To reduce the traveling speed of the electric motorcycle 10, the controller 30 stops the activation of the rotating electric machine 35 in accordance with the operation of the brake levers 24a, and reduces the speed of the electric motorcycle 10 in accordance with the amount of operation of the brake levers 24a.

The pedal 17a is an example of the current adjustment input member of the present invention. The current adjustment input member is not particularly limited, as long as it is configured such that a torque is inputted by the rider's feet and at least part of the inputted torque is transmitted to the front wheel 11 or the rear wheel 12. The current adjustment input member may be in the form of a pedal provided in a crank of a crank mechanism, a foot-operated pedal configured to reciprocate within a predetermined range, or the like. The current adjustment input member is provided separately from the hand-operated accelerator. The current adjustment input member and the hand-operated accelerator are different members.

The gear units and the chain 17b serve as the power transmission mechanism for transmitting, to the wheel, at least part of the torque inputted to the current adjustment input member. In the present invention, the power transmission mechanism is not limited to this example, and any conventionally known power transmission mechanism is adoptable.

Furthermore, a brake (not shown) is also provided in the front wheel 11. This brake and the drum brake of the rear wheel 12 are activated to brake the associated front wheel 11 and the rear wheel 12, respectively, in accordance with the amount of operation of the brake levers 24a.

A bottom of the front end of the seat 16, which is provided on the upper surface of the rear cover unit 15, is pivotable with a hinge coupling 16a. In the interior of the rear cover unit 15, a storage part for placing the battery 33 and a storage part for placing a helmet and the like are provided. Accordingly, when the seat 16 is pivoted about the hinge coupling 16a, the upper surface of the rear cover unit 15 can be opened. Through this opening, the battery 33, the helmet, and the like, can be taken in and out, and charging of the battery 33 can be performed. The electric motorcycle 10 also has a rotary stand (not shown) for keeping the electric motorcycle 10 upright when at rest. The rear portion of the down tube and the pedal unit 17 are covered with a covering member.

If the charge amount of the battery 33 displayed on the display unit has been reduced, a charge cord (not shown) is connected to the battery 33, thereby charging the battery 33. For this charging, the seat 16 is pivoted so that the upper surface of the rear cover unit 15 is opened, and the battery 33 is connected to a power source by using the charge cord. During the charging, the seat 16 is let down so that the upper surface of the rear cover unit 15 is closed. In this state, the charge cord extends to the outside through a gap between the rear cover unit 15 and the seat 16.

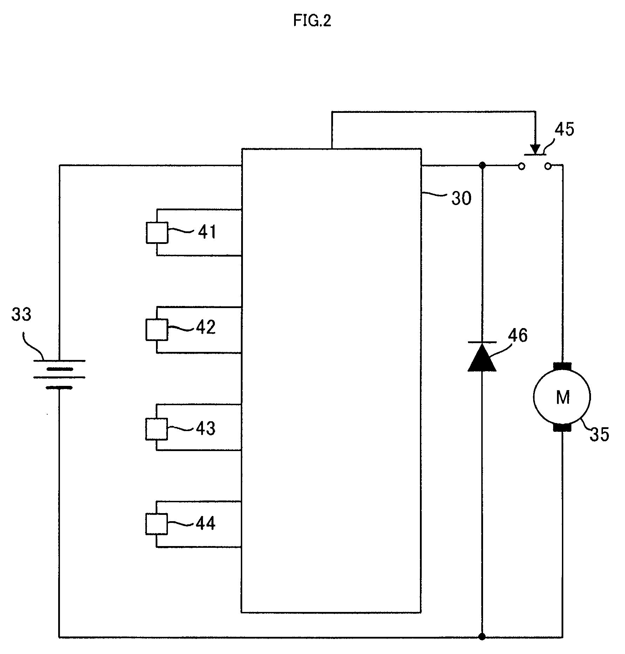

FIG. 2 is a block diagram showing a main configuration concerning the drive system of the electric motorcycle shown in FIG. 1.

The controller 30 is electrically connected to an accelerator position sensor 41, a torque sensor 42, a vehicle speed sensor 43, and a brake sensor 44. For example, conventionally known sensors are adoptable as these sensors 41 to 44.

The accelerator position sensor 41 detects the amount of operation the rider has performed on the grips 23a with his/her hands, and transmits a signal corresponding to the amount of operation to the controller 30.

The torque sensor 42 detects a torque the rider has given to the pedals 17a with his/her feet, and transmits a signal corresponding to the torque to the controller 30. Here, the torque given to the pedals 17a means a torque inputted to a crank shaft (not shown) that couples the two right and left pedals 17a to each other. It suffices that the torque sensor 42 is arranged in a power transmission path extending from the pedals 17a (current adjustment input member) to the rear wheel 12 (wheel). The power transmission path includes the above-mentioned power transmission mechanism. The torque sensor 42 may be arranged in, for example, the pedals 17a. The torque sensor 42 is arranged to detect a torque that is transmitted from the pedals 17a to the rear wheel 12 through the one-way clutch.

The vehicle speed sensor 43 detects a vehicle speed. The brake sensor 44 detects the amount of operation the rider has performed on the brake levers 24a, and transmits a signal corresponding to the amount of operation. The reference numeral 45 denotes the power switch. The reference numeral 46 denotes a rectifier (diode).

The controller 30 includes, for example, a microprocessor serving as an arithmetic processing unit, a memory serving as a storage device, an interface serving as an input/output device, and the like. The memory stores a program for controlling the electric motorcycle 10, and data used for the program. The microprocessor executes processing using the program and data stored in the memory in accordance with a signal that is inputted via the interface, and outputs a result of the processing via the interface. In this manner, the controller 30 controls the electric motorcycle 10.

Under a state where the power switch 45 is powered on, the controller 30 supplies a current from the battery 33 to the rotating electric machine 35 in accordance with the output of the accelerator position sensor 41. The magnitude of an output of the accelerator position sensor 41 changes in accordance with the amount of operation the rider performs on the grips 23a. For example, the magnitude of the output of the accelerator position sensor 41 is proportional to the amount of operation the rider performs on the grips 23a. The controller 30 increases a current value of the current that is supplied from the battery 33 to the rotating electric machine 35 as the output of the accelerator position sensor 41 increases. The current value supplied from the battery 33 to the rotating electric machine 35 is, for example, proportional to the magnitude of the output of the accelerator position sensor 41. A speed range of the electric motorcycle 10 under a state where the pedals 17a are not operated and the grips 23a are operated ranges from 0 km/h to a predetermined value (for example, 20 to 30 km/h) greater than the lowest speed that enables the electric motorcycle 10 to travel while maintaining balance. Here, the lowest speed that enables the electric vehicle to travel while maintaining balance is different depending on electric vehicles, and does not need to be strictly defined. It suffices that the electric vehicle is able to travel while maintaining balance at the upper limit value of the speed range of the electric vehicle.

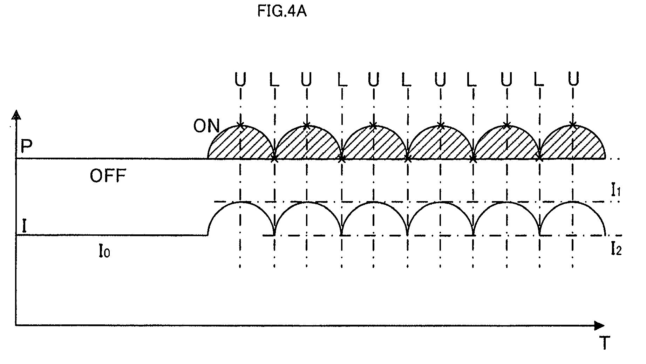

However, at least under a low speed and a low load, when the torque transmitted from the pedals 17a to the rear wheel 12 increases, the controller 30 increases the intensity of the current supplied to the rotating electric machine 35 in accordance with the amount of increase in the torque. When the torque transmitted from the pedals 17a to the rear wheel 12 decreases under a state where the intensity of the current supplied to the rotating electric machine 35 increases, the controller 30 decreases the intensity of the current supplied to the rotating electric machine 35 in accordance with the amount of decrease in the torque. Details of this processing will be described later with reference to FIGS. 4A to 4C.

The rotating electric machine 35, the grips 23a serving as a hand-operated accelerator, the accelerator position sensor 41 serving as an accelerator operation detection part, the pedals 17a serving as a current adjustment input member, the torque sensor 42 serving as a torque detection part, and the controller 30 serving as a control device, constitute a driving apparatus of the electric motorcycle 10.

FIG. 3 is a diagram schematically showing the relationship between an output torque of a rotating electric machine and the number of rotations of the rotating electric machine. In FIG. 3, T represents the output torque of the rotating electric machine. V represents the number of rotations of the rotating electric machine. E represents the efficiency of the controller and the rotating electric machine. The efficiency is defined as the percentage of the ratio of an output to an input. The input means power (W) that is inputted to the rotating electric machine. The output means the product of the angular velocity (rad/sec) and the torque (Nm) of the rotating electric machine. As the number of rotations of the rotating electric machine increases, the vehicle speed of the electric motorcycle increases. Therefore, the number V of rotations in FIG. 3 may be replaced with the vehicle speed.

T_{F} and E_{F} represent the torque and the efficiency of this embodiment, respectively. T_{F} and E_{F} represent the torque and the efficiency obtained under the condition that a voltage value is constant and the output of the accelerator position sensor 41 is maximum (the amount of operation of the grips 23a is maximum). T_{F} and E_{F} are values obtained when the current adjustment in accordance with the output of the torque sensor 42 is not performed. The torque T_{F} is high under a low speed, and low under a high speed. The efficiency E_{F} is low under a low speed, and high under a high speed.

T_{P} represents a value of 1/2 of the maximum output torque of the electric motorcycle 10. V_{P} represents a value of 1/2 of the maximum speed of the electric motorcycle 10. Tp and V_{P} are values obtained when the current is supplied from the battery 33 to the rotating electric machine 35 in accordance with only the output of the accelerator position sensor 41. In other words, T_{P} and V_{P} are values obtained when the current adjustment in accordance with the output of the torque sensor 42 is not performed. In FIG. 3, a region LL represents a region in which the torque is equal to or lower than T_{P} and the speed is equal to or lower than V_{P} (when the speed is low and the load is low). When the speed is low and the load is low, the torque is located within the region LL.

The values of T_{P} and V_{P} mentioned above are merely examples of the present invention. The value of T_{P} is not particularly limited, as long as it is equal to or less than 1/2 of the maximum output torque of the electric motorcycle 10. The value of V_{P} is not particularly limited, as long as it is equal to or less than 1/2 of the maximum speed of the electric motorcycle 10.

Next, the processing for adjusting the current value in accordance with the output of the torque sensor 42 will be described with reference to FIGS. 4A to 4C. For convenience of the description, FIGS. 4A to 4C illustrate a case where the amount of operation that the rider performs on the grips 23a is fixed at a predetermined value. T represents time. I represents a current value of the current that is supplied to the rotating electric machine 35. P represents a torque detected by the torque sensor 42. As described above, the controller 30 determines the presence or absence of the operation of the pedals 17a based on the output of the torque sensor 42.

FIG. 4A is a diagram schematically showing an example of the relationship between time and power supplied to the rotating electric machine.

While the rider does not operate the pedals 17a (OFF), the controller 30 supplies a current having a predetermined value to the rotating electric machine 35 in accordance with the amount of operation of the grips 23a (current value I₀).

When the rider operates the pedals 17a under a state where the grips 23a are operated, the magnitude of the torque detected by the torque sensor 42 changes as shown in FIG. 4A. U represents a point at which the torque detected by the torque sensor 42 reaches its maximum value. L represents a point (the top dead center and the bottom dead center) at which the torque detected by the torque sensor 42 reaches its minimum value.

In the example shown in FIG. 4A, the controller 30 increases the intensity of the current supplied from the battery 33 to the rotating electric machine 35 in accordance with the amount of increase in the torque detected by the torque sensor 42, and decreases the intensity of the current supplied from the battery 33 to the rotating electric machine 35 in accordance with the amount of decrease in the torque detected by the torque sensor 42. Thereby, the controller 30 is able to adjust the current value.

No particular limitation is put on the processing for adjusting the current value. In one possible example, a current value to be added is determined based on the amount of torque detected by the torque sensor 42, and the current value thus determined is added to the current value that has been set based on the amount of operation of the grips 23a. This increases the intensity of the current supplied to the rotating electric machine 35, and thus increases the vehicle speed. As a result, the amount of torque detected by the torque sensor 42 decreases, so that the current value to be added is reduced.

In another possible example, a first command value for the rotating electric machine 35 is calculated based on the amount of torque detected by the torque sensor 42 while a second command value for the rotating electric machine 35 is calculated based on the amount of operation of the grips 23 a, and then a current value to be supplied to the rotating electric machine 35 is determined based on the first command value and the second command value. To be more specific, the current value to be supplied to the rotating electric machine 35 can be determined based on greater one of the first command value and the second command value. In such a case, for example, when the torque detected by the torque sensor 42 increases so that the first command value exceeds the second command value, the current is supplied to the rotating electric machine 35 based on the first command value, to increase the vehicle speed. As a result, the amount of torque detected by the torque sensor 42 decreases, so that the first command value is reduced.

As a result of the adjustment of the current value described above, when the torque detected by the torque sensor 42 is the maximum (U), the controller 30 supplies a maximum current value (I₁) to the rotating electric machine 35. On the other hand, when the torque detected by the torque sensor 42 is the minimum (L), the controller 30 supplies a minimum current value (I₂) to the rotating electric machine 35. Thus, in the example shown in FIG. 4A, a timing when the output of the torque sensor 42 increases is substantially coincident with a timing when the intensity of the current supplied from the battery 33 to the rotating electric machine 35 increases. Accordingly, when the rider strongly operates the pedals 17a, a high torque occurs. As a result, the rider is less likely to feel a change in the riding comfort. Even if the rider feels a change in the riding comfort, such a change is not often recognized as uncomfortableness.

Although the increasing and decreasing of the current value are regularly repeated in the example shown in FIG. 4A, the present invention is not limited to this example. In a case where the torque inputted to the pedals 17a increases and decreases irregularly, the current obtained as a result of the adjustment increases and decreases irregularly, too.

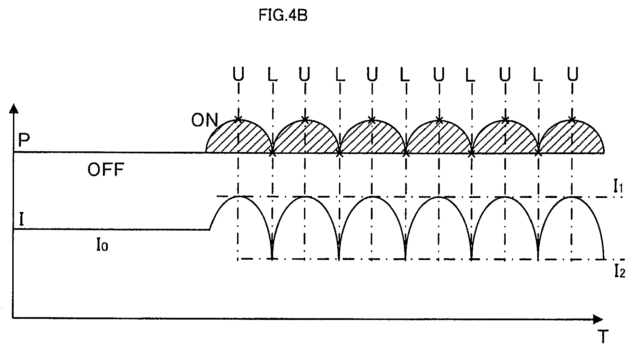

In the example shown in FIG. 4A, in the course of alternately repeating the increasing and decreasing of the current value, the current values I₁ and I₂ are constant values. However, the current values I₁ and I₂ do not always need to be constant. In a case where the maximum value and the minimum value of the torque inputted to the pedals 17a change, the maximum value and the minimum value of the current obtained as a result of the adjustment change, too. The waveform of the current value is not particularly limited. In the example shown in FIG. 4A, the current supplied to the rotating electric machine 35 satisfies I₂=I₀. Instead, it may be acceptable that the current value supplied to the rotating electric machine 35 is set so as to satisfy I₂>I₀. It may be also acceptable that the current value supplied to the rotating electric machine 35 is set so as to satisfy I₂≥I₀. Alternatively, it may be also acceptable that the current supplied to the rotating electric machine 35 satisfies I₂<I₀. A case where the current value satisfies I₂<I₀ will be described with reference to FIG. 4B.

FIG. 4B is a diagram schematically showing an example of the relationship between time and power supplied to the rotating electric machine. In the example shown in FIG. 4B, the current value satisfies I₁>I₀>I₂. Since the current value satisfies I₂<I₀, heat generation in the rotating electric machine 35 is more effectively suppressed at a time of the low current value. This allows the current value I₁ to be set higher. Thus, in the increase in the torque due to the current adjustment, a higher torque can be obtained. Here, the current value I₂ may be zero.

The electric motorcycle 10 may be configured such that, when changing the current value supplied to the rotating electric machine 35 in accordance with the amount of change in the torque that is transmitted to the rear wheel 12, the controller 30 varies the amount of change in the current value based on a remaining battery capacity. The remaining battery capacity can be measured by, for example, a conventionally known remaining battery capacity meter.

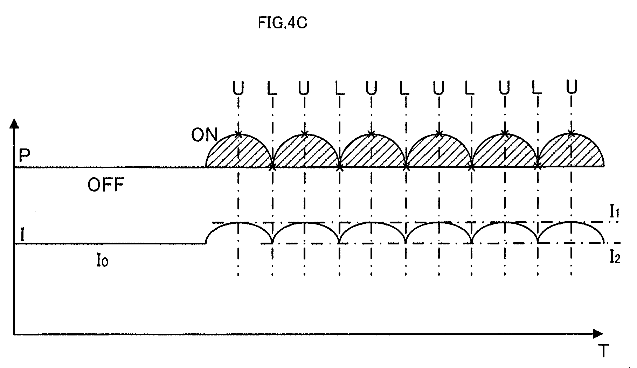

In the electric motorcycle 10, when the remaining battery capacity is equal to or more than a predetermined value (for example, when a battery voltage value is equal to or more than a predetermined value), the controller 30 adjusts the current as shown in FIG. 4A. In the electric motorcycle 10, on the other hand, when the remaining battery capacity is less than a predetermined value (for example, when a battery voltage value is less than a predetermined value), the controller 30 adjusts the current as shown in FIG. 4C as will be described below.

FIG. 4C is a diagram schematically showing an example of the relationship between time and power supplied to the rotating electric machine. A current value (I₁) that the controller 30 supplies to the rotating electric machine 35 when the torque detected by the torque sensor 42 is the maximum (U) in FIG. 4C is less than the current value (I₁) in FIG. 4A. That is, the amount of increase in the current value that the controller 30 supplies to the rotating electric machine 35 in accordance with the amount of increase in the torque detected by the torque sensor 42 in FIG. 4C is less than the amount of increase in the current value in FIG. 4A. Additionally, the amount of decrease in the current value that the controller 30 supplies to the rotating electric machine 35 in accordance with the amount of decrease in the torque detected by the torque sensor 42 in FIG. 4C is less than the amount of decrease in the current value in FIG. 4A. In other words, the amount of change in the current value that the controller 30 supplies to the rotating electric machine 35 in accordance with the amount of change in the torque detected by the torque sensor 42 in FIG. 4C is less than the amount of change in the current value in FIG. 4A. Thus, the electric motorcycle 10 is configured such that the amount of change in the current value that the controller 30 supplies to the rotating electric machine 35 in accordance with the amount of change in the torque detected by the torque sensor 42 decreases as the remaining battery capacity is reduced. This can suppress battery consumption when the remaining battery capacity is low.

This example does not limit a manner for varying the amount of change in the current value based on the remaining battery capacity when changing the current value supplied to the rotating electric machine in accordance with the amount of change in the torque that is transmitted to the wheel.

In the above-described example, the amount of change in the current value is varied when the remaining battery capacity falls below a predetermined value. Alternatively, the amount of change in the current value may be stepwise or continuously varied in accordance with a reduction in the remaining battery capacity.

The above-described example illustrates a case where the amount of increase in the current value relative to the amount of increase in the torque and the amount of decrease in the current value relative to the amount of decrease in the torque decrease when the remaining battery capacity is reduced. However, it may be also acceptable that, for example, when the remaining battery capacity is reduced, the controller (control device) adjusts the current value in the following manner. That is, when the remaining battery capacity is reduced, the controller may vary the amount of change in the current value relative to the amount of change in the torque such that the current value (I₂) obtained at a time when the torque detected by the torque sensor takes the minimum value (L) becomes lower. Additionally, when the remaining battery capacity is reduced, the controller may vary the amount of change in the current value relative to the amount of change in the torque such that the current value (I₁) obtained at a time when the torque detected by the torque sensor takes the maximum value (U) becomes lower.

In the electric motorcycle 10, when a torque inputted to the pedals 17a is detected by the torque sensor 42 under a state where a current is being supplied to the rotating electric machine 35 based on the amount of operation of the grips 23a, the controller 30 adjusts the current in accordance with the amount of change in the torque detected by the torque sensor 42 as shown in FIG. 4A, for example. The adjustment of the current value increases power consumption. When the remaining battery capacity is reduced, the controller 30 varies the amount of change in the current value that is changed in accordance with the amount of change in the torque detected by the torque sensor 42 such that the power consumption caused as a result of the adjustment of the current value is reduced.

As thus far described, in the electric motorcycle 10, in a situation where the current in accordance with the amount of operation of the grips 23a is being supplied to the rotating electric machine 35, the rider can feel, with his/her feet, the reaction force given from the torque inputted to the pedals 17a, and, by adjusting the torque inputted to the pedals 17a, can adjust a torque outputted from the rotating electric machine 35. Accordingly, the torque that the rider inputs to the pedals 17a is likely to be consistent with the rider's intention, and not easily affected by shaking, a change in the rider's posture, and the like, caused under a low speed and a low load. This makes it easy to finely adjust the speed.

In the electric motorcycle 10, at least part of the torque is transmitted from the pedals 17a to the wheel. Therefore, when the speed of rotation of the wheel increases as a result of the adjustment of the current value at a time of accelerating, the torque transmitted from the pedals 17a to the wheel naturally decreases. Accordingly, it is not necessary for the rider to perform the feedback control on the grips 23a or the pedals 17a in order to stop accelerating (to perform an operation of checking the behavior of the accelerated vehicle and then stop the accelerating). This can suppress occurrence of mismatch between the rider's intention in the operation and the behavior of the vehicle.

Therefore, in the electric motorcycle 10, a speed control over a wide range can be performed based on the operation of the grips 23a, and in this state the torque can be smoothly adjusted based on the rider's feeling while the electric motorcycle 10 is traveling based on the operation of the grips 23a. This can solve the problem of a difficulty in a fine speed control in a case of performing the speed control over a wide range by means of the grips 23a, which is a specific problem of the electric vehicle. The electric motorcycle 10 is excellent in ease of use and in riding comfort, and suitable for purposes intimately involved in daily lives.

While this embodiment has been described above, this embodiment is merely one preferred embodiment of the present invention. It is apparent that those skilled in the art can readily make various modifications or changes to this embodiment. Thus, the technical scope of the present invention is defined based on the scope of claims. The present invention is not limited to this embodiment, but may be changed, for example, as follows.

In this embodiment, in accordance with the amount of change in the torque detected by the torque sensor 42 and over the entire speed range irrespective of whether or not the current state is under a low speed and a low load, the controller 30 adjusts the current that is supplied to the rotating electric machine 35. However, in the present invention, it suffices that, at least under a low speed and a low load, the controller 30 is configured to adjust the power supplied to the rotating electric machine 35 in accordance with the amount of change in the torque. For example, in a possible configuration, the controller 30 may, only under a low speed and a low load, adjust the current that is supplied to the rotating electric machine 35 in accordance with the amount of change in the torque sensor 42. In this case, the controller 30 can determine whether or not the current state is under a low speed and a low load, based on the vehicle speed of the electric motorcycle 10 detected by the vehicle speed sensor 43 and the current value supplied to the rotating electric machine 35. For the determination of whether or not the current state is under a low speed and a low load, the number of rotations of the rotating electric machine 35 may be used instead of the vehicle speed of the electric motorcycle 10.

In a case illustrated in this embodiment, the state of being under a low speed and a low load is a state where the torque is equal to or lower than T_{P} and additionally the speed is equal to or lower than V_{P}. However, the present invention is not limited to this example. For example, a state where the amount of operation of the grips 23 does not take the maximum value and additionally the speed is equal to or lower than V_{P} may be set as the state of being under a low speed and a low load.

In this embodiment, in the electric motorcycle 10 configured such that the current value supplied to the rotating electric machine 35 is controlled in accordance with the amount of operation that the rider performs on the grips 23a with his/her hands, the current value supplied to the rotating electric machine 35 is increased or decreased in accordance with the amount of increase or decrease in the torque that the rider inputs to the pedals 17a with his/her feet. In a state where the pedals 17a are not operated and the amount of operation that the rider performs on the grips 23a with his/her hands is zero, the current value supplied to the rotating electric machine 35 is zero. When, under this state, the rider operates the pedals 17a with his/her feet, the current value supplied to the rotating electric machine 35 increases in accordance with the amount of increase in the torque inputted to the pedals 17a. This enables the electric motorcycle 10 to travel even though the grips 23a are not operated. When the grips 23a are operated under a state where the grips 23 a have not been operated and the current value supplied to the rotating electric machine 35 has been adjusted by the operation of the pedals 17a, the current value supplied to the rotating electric machine 35, which increases in accordance with the amount of operation of the grips 23a, increases or decreases in accordance with the amount of increase or decrease in the torque inputted to the pedals 17a.

In the above-described manner, the electric motorcycle 10 is configured such that the controller 30 performs a current value adjustment process in which the current value supplied to the rotating electric machine 35 in accordance with the amount of operation of the grips 23a is increased or decreased in accordance with the amount of increase or decrease in the torque detected by the torque sensor 42. The current value adjustment process may be performed irrespective of the amount of operation of the grips 23a and the magnitude of the torque inputted to the pedals 17a, or may be performed upon an input of the torque to the pedals 17a irrespective of the amount of operation of the grips 23a. Thus, the current value is adjusted upon an input of the torque. No other operations are required for switching whether or not to perform the current value adjustment process. Therefore, an electric adjustment can be promptly provided, to make it possible to efficiently and smoothly pass on a crowded road, a congested intersection, or the like. In the electric motorcycle 10, a mode of performing the current value adjustment process and a mode of not performing the current value adjustment process are not set, and switching these modes is not made.

Moreover, in the electric motorcycle 10, the amount of operation of the grips 23a (hand-operated accelerator) means a difference between an initial value (the amount of operation = 0) and a value obtained after the operation. For example, in a case where the rider keeps holding the grips 23a such that the amount of operation of the grips 23a constantly has a predetermined value, the difference between the initial value and the value obtained after the operation does not change. In such a case, a current in accordance with the predetermined value is continuously supplied to the rotating electric machine 35. On the other hand, the amount of change (the amount of increase or the amount of decrease) in the torque that is inputted to the pedals 17a (current adjustment input member) means the amount of change per unit time (time differential value). For example, in a case where the rider keeps operating the pedals 17a such that the pedals 17a stay at a predetermined position, the amount of change per unit time is zero. In such a case, the current supplied to the rotating electric machine does not change.

While illustrative embodiments of the invention have been described herein, the present invention is not limited to the various preferred embodiments described herein, but includes all embodiments defined in the appended claims.

### [DESCRIPTION OF THE REFERENCE SIGNS]

- 10: electric motorcycle
- 12: rear wheel (wheel)
- 17a: pedal (current adjustment input member)
- 23a: grip (hand-operated accelerator)
- 30: controller (control device)
- 33: battery
- 35: rotating electric machine
- 41: accelerator position sensor (accelerator operation detection part)
- 42: torque sensor (torque detection part)
- 43: vehicle speed sensor
- 44: brake sensor
- 45: power switch

## Claims

1. A driving apparatus for use in electric vehicle (10),
the driving apparatus comprising:
a rotating electric machine (35) configured to drive a wheel (12) that is rotatably mounted to a vehicle body (10a);
a hand-operated accelerator (23a) configured to be operated by the hands of a rider;
an accelerator operation detection part (41) configured to detect the amount of operation of the hand-operated accelerator (23a); **characterised by**
a current adjustment input member (17a) configured such that a torque used for adjustment of a current value supplied to the rotating electric machine (35) is inputted to the current adjustment input member (17a) by the feet of the rider, at least part of the torque being transmitted to a wheel (12) that is rotatably mounted to the vehicle body (10a);
a torque detection part (42) configured to detect a torque transmitted from the current adjustment input member (17a) to the wheel (12); and
a control device (30) configured to supply, to the rotating electric machine (35), a current in accordance with the amount of operation of the hand-operated accelerator (23a) detected by the accelerator operation detection part (41),
the control device (30) being configured to
when a torque transmitted from the current adjustment input member (17a) to the wheel (12) increases under a state where a current in accordance with the amount of operation of the hand-operated accelerator (23a) is being supplied to the rotating electric machine, increase a current supplied to the rotating electric machine (35) in accordance with the amount of increase in the torque transmitted from the current adjustment input member (17a) to the wheel (12), and
when a torque transmitted from the current adjustment input member (17a) to the wheel (12) decreases under a state where a current supplied to the rotating electric machine (35) is increasing, decrease a current supplied to the rotating electric machine (35) in accordance with the amount of decrease in the torque transmitted from the current adjustment input member (17a) to the wheel (12).

2. The driving apparatus for use in electric vehicle (10) according to claim 1, wherein
in a state where the current adjustment input member (17a) is not operated and the hand-operated accelerator (23a) is operated, the control device (30) supplies, to the rotating electric machine, a current in accordance with the amount of operation of the hand-operated accelerator (23a) such that a lower limit value of a speed range of the electric vehicle (10) is 0 km/h and an upper limit value of the speed range of the electric vehicle (10) is greater than the lowest speed that enables the electric vehicle (10) to travel while maintaining balance,
the control device (30) is configured to:
when a torque transmitted from the current adjustment input member (17a) to the wheel (12) increases under a state where a current in accordance with the amount of operation of the hand-operated accelerator (23a) is being supplied to the rotating electric machine (35) so that the electric vehicle (10) is traveling at a speed equal to or higher than the lowest speed, increase a current supplied to the rotating electric machine (35) in accordance with the amount of increase in the torque transmitted from the current adjustment input member (17a) to the wheel (12); and
when a torque transmitted from the current adjustment input member (17a) to the wheel (12) decreases under a state where a current supplied to the rotating electric machine (35) is increasing, decrease a current supplied to the rotating electric machine (35) in accordance with the amount of decrease in the torque transmitted from the current adjustment input member (17a) to the wheel (12).

3. The driving apparatus for use in electric vehicle (10) according to claim 1 or 2, wherein
the driving apparatus includes a one-way clutch configured to transmit, among torques inputted to the current adjustment input member (17a), only a torque corresponding to a direction of advancing of the electric vehicle (10), to a wheel (12) that is rotatably mounted to the vehicle body (10a),
the control device (30) is configured to:
when a torque transmitted from the current adjustment input member (17a) to the wheel (12) through the one-way clutch increases under a state where a current in accordance with the amount of operation of the hand-operated accelerator (23a) is being supplied to the rotating electric machine, increase a current supplied to the rotating electric machine (35) in accordance with the amount of increase in the torque transmitted from the current adjustment input member (17a) to the wheel (12) through the one-way clutch; and
when a torque transmitted from the current adjustment input member (17a) to the wheel (12) through the one-way clutch decreases under a state where a current supplied to the rotating electric machine (35) is increasing, decrease a current supplied to the rotating electric machine (35) in accordance with the amount of decrease in the torque transmitted from the current adjustment input member (17a) to the wheel (12) through the one-way clutch.

4. The driving apparatus for use in electric vehicle (10) according to claim 3, wherein
when a torque is inputted to the current adjustment input member (17a) by the feet of the rider such that the speed of rotation of a wheel (12) caused by a torque inputted to the current adjustment input member (17a) exceeds the speed of rotation of the wheel (12) caused by a current supplied to the rotating electric machine, a torque is transmitted from the current adjustment input member (17a) to the wheel (12) through the one-way clutch,
when the current adjustment input member (17a) is operated such that the speed of rotation of a wheel (12) caused by a torque inputted to the current adjustment input member (17a) falls below the speed of rotation of the wheel (12) caused by a current supplied to the rotating electric machine, the one-way clutch is disconnected.

5. The driving apparatus for use in electric vehicle (10) according to any one of claims 1 to 4, wherein
in changing a current value supplied to the rotating electric machine (35) in accordance with the amount of change in the torque transmitted to the wheel (12), the control device (30) is configured to vary the amount of change in the current value based on a remaining battery capacity.

6. The driving apparatus for use in electric vehicle (10) according to any one of claims 1 to 5, wherein
the control device (30) is configured to:
when a torque transmitted from the current adjustment input member (17a) to the wheel (12) increases under a state where a current in accordance with the amount of operation of the hand-operated accelerator (23a) is being supplied to the rotating electric machine, increase a current supplied to the rotating electric machine (35) in accordance with the amount of increase in the torque transmitted from the current adjustment input member (17a) to the wheel (12), the current resulting from the increase being not less than a current value that has been supplied to the rotating electric machine (35) at a time point when a torque transmitted to the wheel (12) increased; and
when a torque transmitted from the current adjustment input member to the wheel (12) decreases under a state where a current supplied to the rotating electric machine (35) is increasing, decrease a current supplied to the rotating electric machine (35) in accordance with the amount of decrease in the torque transmitted from the current adjustment input member (17a) to the wheel (12), the current resulting from the decrease being not less than a current value that has been supplied to the rotating electric machine (35) at a time point when a torque transmitted to the wheel (12) increased.

7. An electric vehicle (10),
the electric vehicle comprising:
a vehicle body (10a);
a wheel (12) that is rotatably mounted to the vehicle body (10a); and
the driving apparatus for use in an electric vehicle (10) according to any one of claims 1 to 6.

## Patentansprüche

1. Eine Antriebsvorrichtung zur Verwendung bei einem Elektrofahrzeug (10), wobei die Antriebsvorrichtung folgende Merkmale aufweist:
eine drehende Elektromaschine (35), die ausgebildet ist, ein Rad (12) anzutreiben, das drehbar an einem Fahrzeugaufbau (10a) befestigt ist;
einen handbetätigten Gashebel (23a), der ausgebildet ist, durch die Hände eines Fahrers betätigt zu werden;
ein Gashebelbetätigungserfassungsbauteil (41), das ausgebildet ist, die Betätigungsmenge des handbetätigten Gashebels (23a) zu erfassen;
**gekennzeichnet durch**
ein Stromeinstellungseingabebauglied (17a), das derart ausgebildet ist, dass ein Drehmoment, das zur Einstellung eines der drehenden Elektromaschine (35) zugeführten Stromwerts verwendet wird, **durch** die Füße des Fahrers in das Stromeinstellungseingabebauglied (17a) eingegeben wird, wobei zumindest ein Teil des Drehmoments an ein Rad (12) übertragen wird, das drehbar an dem Fahrzeugaufbau (10a) befestigt ist;
ein Drehmomenterfassungsbauteil (42), das ausgebildet ist, ein Drehmoment zu erfassen, das von dem Stromeinstellungseingabebauglied (17a) an das Rad (12) übertragen wird; und
eine Steuereinrichtung (30), die ausgebildet ist, der drehenden Elektromaschine (35) gemäß der Betätigungsmenge des handbetätigten Gashebels (23a), die **durch** das Gashebelbetätigungserfassungsbauteil (41) erfasst wird, einen Strom zuzuführen,
wobei die Steuereinrichtung (30) ausgebildet ist,
dann, wenn ein von dem Stromeinstellungseingabebauglied (17a) an das Rad (12) übertragenes Drehmoment in einem Zustand zunimmt, während dessen ein Strom gemäß der Betätigungsmenge des handbetätigten Gashebels (23a) der drehenden Elektromaschine zugeführt wird, einen Strom, der der drehenden Elektromaschine (35) zugeführt wird, gemäß der Erhöhungsmenge des von dem Stromeinstellungseingabebauglied (17a) an das Rad (12) übertragenen Drehmoments zu erhöhen und
dann, wenn ein von dem Stromeinstellungseingabebauglied (17a) an das Rad (12) übertragenes Drehmoment in einem Zustand abnimmt, während dessen ein Strom, der der drehenden Elektromaschine (35) zugeführt wird, zunimmt, einen Strom, der der drehenden Elektromaschine (35) zugeführt wird, gemäß der Verringerungsmenge des von dem Stromeinstellungseingabebauglied (17a) an das Rad (12) übertragenen Drehmoments zu verringern.

2. Die Antriebsvorrichtung zur Verwendung bei einem Elektrofahrzeug (10) gemäß Anspruch 1, wobei in einem Zustand, während dessen das Stromeinstellungseingabebauglied (17a) nicht betätigt wird und der handbetätigte Gashebel (23a) betätigt wird, die Steuereinrichtung (30) der drehenden Elektromaschine gemäß der Betätigungsmenge des handbetätigten Gashebels (23a) einen Strom zuführt, so dass ein unterer Grenzwert eines Geschwindigkeitsbereichs des Elektrofahrzeugs (10) 0 km/h beträgt und ein oberer Grenzwert des Geschwindigkeitsbereichs des Elektrofahrzeugs (10) größer als die niedrigste Geschwindigkeit ist, die es dem Elektrofahrzeug (10) ermöglicht, zu fahren und dabei das Gleichgewicht zu halten, die Steuereinrichtung (30) ausgebildet ist:
dann, wenn ein von dem Stromeinstellungseingabebauglied (17a) an das Rad (12) übertragenes Drehmoment in einem Zustand zunimmt, während dessen ein Strom gemäß der Betätigungsmenge des handbetätigten Gashebels (23a) der drehenden Elektromaschine (35) zugeführt wird, so dass das Elektrofahrzeug (10) mit einer Geschwindigkeit fährt, die größer als oder gleich der niedrigsten Geschwindigkeit ist, einen Strom, der der drehenden Elektromaschine (35) zugeführt wird, gemäß der Erhöhungsmenge des von dem Stromeinstellungseingabebauglied (17a) an das Rad (12) übertragenen Drehmoments zu erhöhen und
dann, wenn ein von dem Stromeinstellungseingabebauglied (17a) an das Rad (12) übertragenes Drehmoment in einem Zustand abnimmt, während dessen ein Strom, der der drehenden Elektromaschine (35) zugeführt wird, zunimmt, einen Strom, der der drehenden Elektromaschine (35) zugeführt wird, gemäß der Verringerungsmenge des von dem Stromeinstellungseingabebauglied (17a) an das Rad (12) übertragenen Drehmoments zu verringern.

3. Die Antriebsvorrichtung zur Verwendung bei einem Elektrofahrzeug (10) gemäß Anspruch 1 oder 2, wobei
die Antriebsvorrichtung eine Freilaufkupplung umfasst, die ausgebildet ist, von in das Stromeinstellungseingabebauglied (17a) eingegebenen Drehmomenten lediglich ein Drehmoment, das einer Fortbewegungsrichtung des Elektrofahrzeugs (10) entspricht, an ein Rad (12) zu übertragen, das drehbar an dem Fahrzeugaufbau (10a) befestigt ist,
die Steuereinrichtung (30) ausgebildet ist:
dann, wenn ein durch die Freilaufkupplung von dem Stromeinstellungseingabebauglied (17a) an das Rad (12) übertragenes Drehmoment in einem Zustand zunimmt, während dessen ein Strom gemäß der Betätigungsmenge des handbetätigten Gashebels (23a) der drehenden Elektromaschine zugeführt wird, einen Strom, der der drehenden Elektromaschine (35) zugeführt wird, gemäß der Erhöhungsmenge des durch die Freilaufkupplung von dem Stromeinstellungseingabebauglied (17a) an das Rad (12) übertragenen Drehmoments zu erhöhen und
dann, wenn ein durch die Freilaufkupplung von dem Stromeinstellungseingabebauglied (17a) an das Rad (12) übertragenes Drehmoment in einem Zustand abnimmt, während dessen ein Strom, der der drehenden Elektromaschine (35) zugeführt wird, zunimmt, einen Strom, der der drehenden Elektromaschine (35) zugeführt wird, gemäß der Verringerungsmenge des durch die Freilaufkupplung von dem Stromeinstellungseingabebauglied (17a) an das Rad (12) übertragenen Drehmoments zu verringern.

4. Die Antriebsvorrichtung zur Verwendung bei einem Elektrofahrzeug (10) gemäß Anspruch 3, bei der
dann, wenn ein Drehmoment durch die Füße des Fahrers in das Stromeinstellungseingabebauglied (17a) derart eingegeben wird, dass die Drehgeschwindigkeit eines Rads (12), die durch ein in das Stromeinstellungseingabebauglied (17a) eingegebenes Drehmoment bewirkt wird, die Drehgeschwindigkeit des Rads (12) übersteigt, die durch einen der drehenden Elektromaschine zugeführten Strom bewirkt wird, ein Drehmoment durch die Freilaufkupplung von dem Stromeinstellungseingabebauglied (17a) an das Rad (12) übertragen wird,
dann, wenn das Stromeinstellungseingabebauglied (17a) derart betätigt wird, dass die Drehgeschwindigkeit eines Rads (12), die durch ein in das Stromeinstellungseingabebauglied (17a) eingegebenes Drehmoment bewirkt wird, unter die Drehgeschwindigkeit des Rads (12) fällt, die durch einen Strom bewirkt wird, der der drehenden Elektromaschine zugeführt wird, die Freilaufkupplung getrennt wird.

5. Die Antriebsvorrichtung zur Verwendung bei einem Elektrofahrzeug (10) gemäß einem der Ansprüche 1 bis 4, bei der
beim Ändern eines Stromwerts, der der drehenden Elektromaschine (35) gemäß der Änderungsmenge des an das Rad (12) übertragenen Drehmoments zugeführt wird, die Steuereinrichtung (30) ausgebildet ist, die Änderungsmenge des Stromwerts basierend auf einer Restbatteriekapazität zu variieren.

6. Die Antriebsvorrichtung zur Verwendung bei einem Elektrofahrzeug (10) gemäß einem der Ansprüche 1 bis 5, bei der
die Steuereinrichtung (30) ausgebildet ist:
dann, wenn ein von dem Stromeinstellungseingabebauglied (17a) an das Rad (12) übertragenes Drehmoment in einem Zustand zunimmt, während dessen ein Strom gemäß der Betätigungsmenge des handbetätigten Gashebels (23a) der drehenden Elektromaschine zugeführt wird, einen Strom, der der drehenden Elektromaschine (35) zugeführt wird, gemäß der Erhöhungsmenge des von dem Stromeinstellungseingabebauglied (17a) an das Rad (12) übertragenen Drehmoments zu erhöhen, wobei der aus der Erhöhung resultierende Strom nicht weniger beträgt als ein Stromwert, der der drehenden Elektromaschine (35) zu einem Zeitpunkt zugeführt wurde, als ein an das Rad (12) übertragenes Drehmoment zunahm und
dann, wenn ein von dem Stromeinstellungseingabebauglied an das Rad (12) übertragenes Drehmoment in einem Zustand abnimmt, während dessen ein Strom, der der drehenden Elektromaschine (35) zugeführt wird, zunimmt, einen Strom, der der drehenden Elektromaschine (35) zugeführt wird, gemäß der Verringerungsmenge des von dem Stromeinstellungseingabebauglied (17a) an das Rad (12) übertragenen Drehmoments zu verringern, wobei der aus der Verringerung resultierende Strom nicht weniger beträgt als ein Stromwert, der der drehenden Elektromaschine (35) zu einem Zeitpunkt zugeführt wurde, als ein an das Rad (12) übertragenes Drehmoment zunahm.

7. Ein Elektrofahrzeug (10),
wobei das Elektrofahrzeug folgende Merkmale aufweist:
einen Fahrzeugaufbau (10a);
ein Rad (12), das drehbar an dem Fahrzeugaufbau (10a) befestigt ist; und
die Antriebsvorrichtung zur Verwendung bei einem Elektrofahrzeug (10) gemäß einem der Ansprüche 1 bis 6.

## Revendications

1. Appareil d'entraînement destiné à être utilisé dans un véhicule électrique (10),
l'appareil d'entraînement comprenant:
une machine électrique rotative (35) configurée pour entraîner une roue (12) qui est montée de manière rotative sur une carrosserie de véhicule (10a);
un accélérateur à commande manuelle (23a) configuré pour être actionné par les mains d'un conducteur;
une partie de détection d'actionnement d'accélérateur (41) configurée pour détecter la quantité d'actionnement de l'accélérateur à commande manuelle (23a);
**caractérisé par**
un élément d'entrée de réglage de courant (17a) configuré de sorte qu'un couple utilisé pour le réglage d'une valeur de courant alimenté vers la machine électrique rotative (35) soit entré dans l'élément d'entrée de réglage de courant (17a) par les pieds du conducteur, au moins une partie du couple étant transmise à une roue (12) qui est montée de manière rotative sur la carrosserie de véhicule (10a);
une partie de détection de couple (42) configurée pour détecter un couple transmis de l'élément d'entrée de réglage de courant (17a) à la roue (12); et
un dispositif de commande (30) configuré pour alimenter vers la machine électrique rotative (35) un courant en fonction de la quantité d'actionnement de l'accélérateur à commande manuelle (23a) détectée par la partie de détection d'actionnement d'accélérateur (41),
le dispositif de commande (30) étant configuré pour
lorsqu'un couple transmis de l'élément d'entrée de réglage de courant (17a) à la roue (12) augmente dans un état où un courant en fonction de la quantité d'actionnement de l'accélérateur à commande manuelle (23a) est alimenté vers la machine électrique rotative, augmenter un courant alimenté vers la machine électrique rotative (35) en fonction de la quantité d'augmentation du couple transmis de l'élément d'entrée de réglage de courant (17a) à la roue (12), et
lorsqu'un couple transmis de l'élément d'entrée de réglage de courant (17a) à la roue (12) diminue dans un état où un courant alimenté vers la machine électrique rotative (35) augmente, diminuer un courant alimenté vers la machine électrique rotative (35) en fonction de la quantité de diminution du couple transmis de l'élément d'entrée de réglage de courant (17a) à la roue (12).

2. Appareil d'entraînement destiné à être utilisé dans un véhicule électrique (10) selon la revendication 1, dans lequel
dans un état où l'élément d'entrée de réglage de courant (17a) n'est pas actionné et l'accélérateur à commande manuelle (23a) est actionné, le dispositif de commande (30) alimente vers la machine électrique rotative un courant en fonction de la quantité d'actionnement de l'accélérateur à commande manuelle (23a) de sorte qu'une valeur limite inférieure d'une plage de vitesses du véhicule électrique (10) soit de 0 km/h et qu'une valeur limite supérieure de la plage de vitesses du véhicule électrique (10) soit supérieure à la vitesse la plus basse qui permet que le véhicule électrique (10) se déplace tout en maintenant l'équilibre,
le dispositif de commande (30) est configuré pour:
lorsqu'un couple transmis de l'élément d'entrée de réglage de courant (17a) à la roue (12) augmente dans un état où un courant en fonction de la quantité d'actionnement de l'accélérateur à commande manuelle (23a) est alimenté vers la machine électrique rotative (35) de sorte que le véhicule électrique (10) se déplace à une vitesse égale ou supérieure à la vitesse la plus basse, augmenter le courant alimenté vers la machine électrique rotative (35) en fonction de la quantité d'augmentation du couple transmis de l'élément d'entrée de réglage de courant (17a) à la roue (12); et
lorsqu'un couple transmis de l'élément d'entrée de réglage de courant (17a) à la roue (12) diminue dans un état où un courant alimenté vers la machine électrique rotative (35) augmente, diminuer un courant alimenté vers la machine électrique rotative (35) en fonction de la quantité de diminution du couple transmis de l'élément d'entrée de réglage de courant (17a) à la roue (12).

3. Appareil d'entraînement destiné à être utilisé dans un véhicule électrique (10) selon la revendication 1 ou 2, dans lequel
l'appareil d'entraînement comporte un embrayage unidirectionnel configuré pour transmettre, parmi les couples entrés dans l'élément d'entrée de réglage de courant (17a), uniquement un couple correspondant à une direction d'avance du véhicule électrique (10), à une roue (12) qui est montée de manière rotative sur la carrosserie de véhicule (10a),
le dispositif de commande (30) est configuré pour:
lorsqu'un couple transmis de l'élément d'entrée de réglage de courant (17a) à la roue (12) par l'intermédiaire de l'embrayage unidirectionnel augmente dans un état où un courant en fonction de la quantité d'actionnement de l'accélérateur à commande manuelle (23a) est alimenté vers la machine électrique rotative, augmenter un courant alimenté vers la machine électrique rotative (35) en fonction de la quantité d'augmentation du couple transmis de l'élément d'entrée de réglage de courant (17a) à la roue (12) par l'intermédiaire de l'embrayage unidirectionnel; et
lorsqu'un couple transmis de l'élément d'entrée de réglage de courant (17a) à la roue (12) par l'intermédiaire de l'embrayage unidirectionnel diminue dans un état où un courant alimenté vers la machine électrique rotative (35) augmente, diminuer un courant alimenté vers la machine électrique rotative (35) en fonction de la quantité de diminution du couple transmis de l'élément d'entrée de réglage de courant (17a) à la roue (12) par l'intermédiaire de l'embrayage unidirectionnel.

4. Appareil d'entraînement destiné à être utilisé dans un véhicule électrique (10) selon la revendication 3, dans lequel
lorsqu'un couple est entré dans l'élément d'entrée de réglage de courant (17a) par les pieds du conducteur de sorte que la vitesse de rotation d'une roue (12) provoquée par un couple entré dans l'élément d'entrée de réglage de courant (17a) excède la vitesse de rotation de la roue (12) provoquée par un courant alimenté vers la machine électrique rotative, un couple est transmis de l'élément d'entrée de réglage de courant (17a) à la roue (12) par l'intermédiaire de l'embrayage unidirectionnel,
lorsque l'élément d'entrée de réglage de courant (17a) est actionné de sorte que la vitesse de rotation d'une roue (12) provoquée par un couple entré dans l'élément d'entrée de réglage de courant (17a) tombe au-dessous de la vitesse de rotation de la roue (12) provoquée par un courant alimenté vers la machine électrique rotative, l'embrayage unidirectionnel est déconnecté.

5. Appareil d'entraînement destiné à être utilisé dans un véhicule électrique (10) selon l'une quelconque des revendications 1 à 4, dans lequel
lors du changement d'une valeur de courant alimenté vers la machine électrique rotative (35) en fonction de la quantité de changement du couple transmis
à la roue (12), le dispositif de commande (30) est configuré pour faire varier la quantité de changement de la valeur de courant sur base de la capacité de batterie restante.

6. Appareil d'entraînement destiné à être utilisé dans un véhicule électrique (10) selon l'une quelconque des revendications 1 à 5, dans lequel
le dispositif de commande (30) est configuré pour:
lorsqu'un couple transmis de l'élément d'entrée de réglage de courant (17a) à la roue (12) augmente dans un état où un courant en fonction de la quantité d'actionnement de l'accélérateur à commande manuelle (23a) est alimenté vers la machine électrique rotative, augmenter un courant alimenté vers la machine électrique rotative (35) en fonction de la quantité d'augmentation du couple transmis de l'élément d'entrée de réglage de courant (17a) à la roue (12), le courant résultant de l'augmentation n'étant pas inférieur à une valeur de courant qui a été alimenté vers la machine électrique rotative (35) à un moment où augmentait un couple transmis à la roue (12); et
lorsqu'un couple transmis de l'élément d'entrée de réglage de courant à la roue (12) diminue dans un état où un courant alimenté vers la machine électrique rotative (35) augmente, diminuer un courant alimenté vers la machine électrique rotative (35) en fonction de la quantité de diminution du couple transmis de l'élément d'entrée de réglage de courant (17a) à la roue (12), le courant résultant de la diminution n'étant pas inférieur à une valeur de courant qui a été alimenté vers la machine électrique rotative (35) à un moment où augmentait un couple transmis à la roue (12).

7. Véhicule électrique (10),
le véhicule électrique comprenant:
une carrosserie de véhicule (10a);
une roue (12) qui est montée de manière rotative sur la carrosserie de véhicule (10a); et
l'appareil d'entraînement destiné à être utilisé dans un véhicule électrique (10) selon l'une quelconque des revendications 1 à 6.
